# EUROPÄISCHE PATENTSCHRIFT

(11) **EP 0 842 627 B1**
(45) Veröffentlichungstag und Bekanntmachung des Hinweises auf die Patenterteilung: **09.05.2001**
(21) Anmeldenummer: 97118030.2
(22) Anmeldetag: 17.10.1997
(51) Int. Cl.: A47J 43/07

(54) **Rühr-, Knet- und/oder Schneidwerkzeug für ein Küchengerät**
Mixing, kneeding or cutting tool for a kitchen appliance
Outil à mélanger, pétrir ou couper pour un appareil de cuisine

(30) Priorität: 09.11.1996 DE 19646329
(43) Veröffentlichungstag der Anmeldung: 20.05.1998
(73) Patentinhaber: Braun GmbH, Kronberg (DE)
(72) Erfinder: Lorenz, Marga, 60316 Frankfurt am Main (DE); Kamprath, Karl-Heinz, 65207 Wiesbaden (DE); Oppermann, Günter, 63128 Dietzenbach (DE)

(56) Entgegenhaltungen:
- EP-A- 0 191 119
- DE-A- 3 144 438
- DE-A- 4 037 122
- GB-A- 1 079 985
- US-A- 1 846 027

## Beschreibung

Die Erfindung betrifft ein Rühr-, Knet- und/oder Schneidwerkzeug für ein Küchengerät, insbesondere zum Rühren, Kneten und/oder Zerkleinern von Nahrungsmitteln, mit einem antreibbaren Nabenteil zum drehfesten Ankoppeln an eine Arbeitswelle, und mit mindestens zwei sich radial von der Achse des Nabenteils erstreckenden Rühr-, Knet- und/oder Schneidwerkzeug, wobei der Nabenabschnitt, in Richtung der Achse gesehen, in einen unteren, die Werkzeuge aufnehmenden Nabenabschnitt und mindestens einen weiteren, oberen Nabenabschnitt aufweist, wobei letzterer, in Projektion auf eine Ebene senkrecht zur Achse gesehen, eine ovale Außenkontur aufweist.

Rühr-, Knet- und/oder Schneidwerkzeuge der eingangs genannten Art werden mit einer Antriebswelle oder einer Aufnahme verbunden. Je nach dem Arbeitseinsatz kann dieses Arbeitswerkzeug gewechselt werden. Die Arbeitswerkzeuge weisen, entsprechend ihrem Arbeitseinsatz, sehr unterschiedliche Formen und Geometrien auf. Arbeitswerkzeuge zum Rühren sind üblicherweise aus stab- oder messerartigen, gebogenen Teilen gebildet. Sie können aber auch aus Kunststoff gespritzt sein mit stab- oder fächerartigen Elementen, um beispielsweise Sahne zu schlagen. Eine andere Art solcher Werkzeuge sind Schneidmesser, die insbesondere in stationären Geräten zum Zerkleinern von Nahrungsmitteln eingesetzt werden. Solche Schneidmesser besitzen ein Nabenteil, von dem sich radial nach außen mindestens zwei Schneidmesserteile erstrecken.

Ein Arbeitswerkzeug in Form eines Schneidmessers ist aus der US-A-4,143,824 bekannt. Das Nabenteil weist eine hülsenartige Form mit einem oberen, geschlossenen Ende und einem unteren, offenen Ende auf, in das eine Antriebsachse einsetzbar ist. Im Bereich des unteren, offenen Endes erstrecken sich zwei Schneidmesser radial nach außen, geringfügig an ihren Enden nach unten abgewinkelt. In Bezug auf die Achse der Hülse ist das eine Schneidmesser zu dem anderen versetzt. Das Nabenteil besitzt einen kreisförmigen Querschnitt und ist von dem unteren, offenen Ende zu dem oberen, geschlossenen Ende hin in zwei unterschiedlichen Durchmessern abgestuft, wobei der geringste, kreisförmige Querschnitt am oberen, geschlossenen Ende, ausgebildet ist. Die Rühr- und Knetergebnisse sind nur befriedigend.

Aus der DE-A-31 44 438 ist ein Arbeitswerkzeug bekannt, das diametral gegenüberliegende und vom Nabenteil sich wegerstreckende Messer aufweist. Das Nabenteil erstreckt sich über den zentralen Bereich der Messer nach oben hinaus und weist einen Abschnitt kleineren Durchmessers auf, der sich nach oben an eine Stufe anschließt. Der Abschnitt kleineren Durchmessers weist nach außen ragende und in Längsrichtung der Achse verlaufende und diametral gegenüberliegende Längsrippen auf, die die eigentlichen Knetelemente des Arbeitswerkzeugs bilden. Gleiches gilt für das Arbeitswerkzeug nach der GB-A-1°079°985.

Aus der US-A-1,846,027 ist ein Arbeitswerkzeug für ein Küchengerät mit einem antreibbaren Nabenabschnitt bekannt, wobei der obere Nabenabschnitt, in Projektion auf eine Ebene senkrecht zur Achse gesehen, eine ovale Außenkontur aufweist.

Ausgehend von dem eingangs beschriebenen Stand der Technik sowie der vorstehend beschriebenen Problematik liegt der vorliegenden Erfindung die Aufgabe zugrunde, ein Arbeitswerkzeug für ein Küchengerät derart weiterzubilden, daß dieses Nahrungsmittel besser vermischt und dabei leichtgewichtig ausgebildet ist.

Diese Aufgabe wird bei einem Arbeitswerkzeug der eingangs genannten Art durch die kennzeichnenden Merkmale des Patentanspruchs 1 gelöst. Für einen leichtgewichtigen Aufbau können mehrere zueinander beabstandete Horizontalrippen im Bereich des oberen Nabenabschnitts gebildet sein, die jeweils eine ovale bzw. elliptische Außenkontur aufweisen. Diese Rippen sind so beabstandet, daß ihr Abstand ausreichend ist, um bei einem Schneidwerkzeug die sich im Bereich des oberen Nabenteils anlagernden, noch groben Nahrungsmittelteile aufgrund der ovalen Außenkontur jeweils von der Nabe radial nach außen zu bewegen. Dies führt bei einem Knetwerkzeug zu einer besseren Verrührung und bei einem Messer zu einer schnelleren Zerkleinerung. Aufgrund der ovalen Außenkontur im oberen Nabenabschnitt wird die Masse an Nahrungsmitteln, die sich im Bereich der Außenfläche des Nabenteils befindet, im Gegensatz zu einem Nabenteil mit einer kreisförmigen Außenkontur, unter Drehung des Nabenteils ständig radial nach außen verschoben, und zwar, aufgrund des ovalen Querschnitts, unter jeder Umdrehung des Nabenteils zweimal.

Die Nahrungsmittel an der Oberfläche des Nabenteils werden, in Bezug auf einen fiktiven, festgelegten Punkt, wellenartig bewegt. Im Bereich der großen Halbachse des ovalen Querschnitts drücken sie sich nach außen, während sie im Bereich der kleinen Halbachse des Querschnitts wieder zu der Nabe hin laufen. Es wird verständlich werden, daß in Bezug auf den ovalen Querschnitt zumindest einige Bereiche, in Längsrichtung der Achse des Naben teils gesehen, einen solchen Querschnitt aufweisen sollen, so daß sich eine ovale Außenkontur dieses oberen Nabenabschnitts, in Projektion auf eine Ebene senkrecht zur Achse gesehen, ergibt.

Bevorzugt wird die ovale Außenkontur einer Ellipse angenähert, d.h. die Außenkontur weist, im Querschnitt gesehen, zwei aufeinander senkrecht stehende Achsen auf, die die große und die kleine Halbachse jeweils des ellipsenförmigen Querschnitts bilden, eine symmetrische Form auf.

Um dennoch den ovalen oder elliptischen Querschnitt des Nabenteils in seinen maximalen Abmessungen gering zu halten, was auch aus fertigungstechnischen Gründen von Vorteil wäre, sollte der Querschnitt entlang der großen Halbachse der ovalen oder elliptischen Außenkontur etwa dem Durchmesser des unteren Nabenabschnitts entsprechen. Dies bedeutet, daß der maximale Querschnitt, davon ausgehend, daß der untere Nabenabschnitt, an dem beispielsweise Schneidmesser befestigt sind, den maximalen Querschnitt des Nabenteils aufweist, das Nabenteil auch im oberen, ovalen oder elliptischen Abschnitt, über diesen unteren Querschnitt des Nabenteils in Projektion nicht hinausreicht.

In Verbindung mit einem solchen rippenartigen Aufbau wird die oberste Horizontalrippe gemäß Anspruch 2 als stirnseitiger Abschluß des oberen Nabenabschnitts vorgesehen. Weiterhin sollten gemäß Anspruch 3 in Bezug auf den rippenartigen Aufbau mindestens zwei Zwischen-Horizontalrippen zwischen der oberen Abschluß-Horizontalrippe und dem unteren Nabenabschnitt vorgesehen werden. Entlang der Achse kann, zur Stabilisierung der Rippe und zur Aufnahme einer sich in den oberen Nabenabschnitt hinein erstreckenden Welle, ein Hülsenteil vorgesehen werden, dessen Oberfläche zwischen den jeweiligen Horizontalrippen freiliegt (Anspruch 4).

Falls die Horizontalrippen sehr dünnwandig ausgebildet sind und um weiterhin die Wirkung der ovalen Außenkontur in Bezug auf die Bewegung der Nahrungsmittel radial nach außen zu erhöhen, kann es von Vorteil sein gemäß Anspruch 5 mindestens eine sich nach außen erstreckende Vertikalrippe vorzusehen, die sich jeweils zwischen den einzelnen Horizontalrippen erstreckt, die gemäß Anspruch 6 bevorzugt in einer Ebene liegt und die durch die Achse des Nabenteils verläuft. Darüber hinaus ist es gemäß Anspruch 7 und 8 zu bevorzugen, daß die Vertikalrippe(n) in Richtung der großen Halbachse des Querschnitts der Außenkontur verläuft (verlaufen) und sich darüber hinaus bis zu der Außenkontur erstrecken, d.h. die Kante der Vertikalrippen schließt mit der Kante der Horizontalrippen ab.

Insbesondere für sehr schnell laufende Arbeitswerkzeuge ist ein unwuchtfreier, runder Lauf wesentlich, um das Küchengerät im Betrieb vibrationsfrei zu halten. Um den Schwerpunkt eines solchen Arbeitswerkzeugs im Rahmen der Endbearbeitung zu korrigieren, wird gemäß Anspruch 9 eine Aufnahme in der obersten Horizontalrippe vorgesehen, in die ein Wuchtgewicht je nach Zutat und Größe eingesetzt werden kann. Damit eine solche Aufnahme für ein Wuchtgewicht in einfacher Weise durch eine Bohrung, beispielsweise eine Sacklochbohrung in der obersten Rippe gebildet werden kann, wird die oberste Horizontalrippe, die den oberen Abschnitt des Nabenteils in axialer Richtung abschließt, in der doppelten Dicke wie die weiteren Horizontalrippen ausgeführt (Anspruch 10).

Die Horizontalrippen sollten gemäß Anspruch 11 eine Dicke von etwa 1,5 bis 8 mm aufweisen; eine Dicke von etwa 8 mm ist für die oberste, abschließende Horizontalrippen zu bevorzugen, während Horizontalrippen, die Zwischenrippen bilden, im Bereich von 1,5 bis etwa 3 mm in der Dicke ausgeführt werden.

Weitere Einzelheiten und Merkmale der Erfindung ergeben sich aus der nachfolgenden Beschreibung eines Ausführungsbeispiels anhand der Zeichnung. In der Zeichnung zeigt:
- Fig. 1: eine perspektivische Ansicht eines Arbeitswerkzeugs in Forrn eines Schneidwerkzeugs zum Zerkleinern und Rühren von Nahrungsmitteln,
- Fig. 2: eine Seitenansicht aus Richtung des Sichtpfeils II in Fig, 1, wobei ein oberer Bereich teilweise aufgeschnitten ist,
- Fig. 3: zeigt eine Draufsicht auf das Schneidwerkzeug aus Richtung des Sichtpfeils III in Fig. 1, und
- Fig. 4: zeigt einen Schnitt entlang der Schnittlinie IV-IV in Fig. 2.

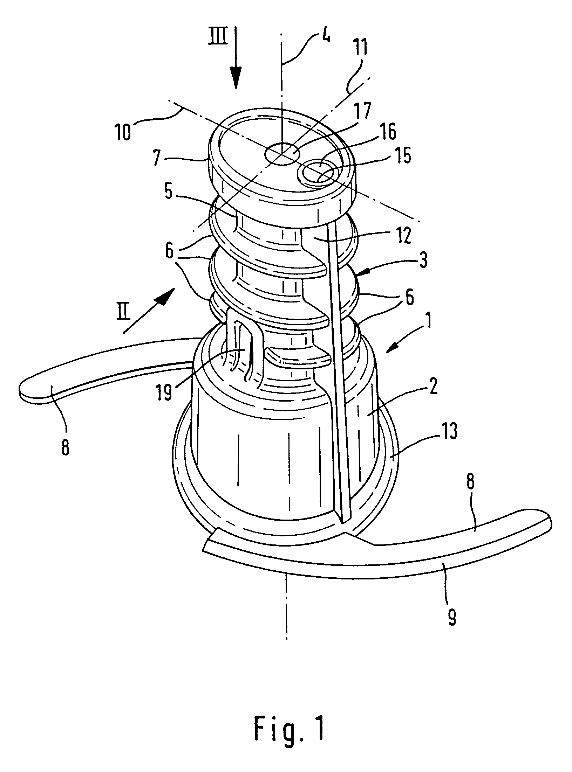

Das Schneidwerkzeug, wie es in den Figuren 1 bsi 4 dargestellt ist, weist ein Nabenteil 1 mit einem unteren Nabenabschnitt 2 mit einer Außenseite 23 und einem oberen Nabenabschnitt 3 auf. Der untere Nabenabschnitt 2 besitzt einen etwa kreisförmigen Querschnitt, der konzentrisch zur Achse 4 verläuft. Der obere Nabenabschnitt 3 ist aus einem Hülsenteil 5 mit der Außenfläche 22 und mehreren, horizontal, d.h. unter einem Winkel von 90° zu der Achse 4, verlaufenden Horizontalrippen 6 aufgebaut, wobei die obere, den oberen Nabenabschnitt 3 an der Oberseite abschließende Horizontalrippe mit dem Bezugszeichen 7 bezeichnet ist. Die Horizontalrippen 6 können auch zur besseren Durchmischung der Nahrungsmittel leicht schräg zur Achse 4 geneigt sein.

In dem unteren Bereich des unteren Nabenabschnitts 2 sind zwei sichelförmige Schneidmesser 8, die jeweils eine Schneidkante 9 aufweisen, eingebettet bzw. eingespritzt. Die Schneidmesser 8 erstrecken sich radial nach außen von der Achse 4 und beschreiben einen Bogenabschnitt.

Wie die Figuren 1, 2 und 4 zeigen, besitzen die Zwischen-Horizontalrippen 6 und die oberste Horizontalrippe 7 eine elliptische Kontur, so daß in der Projektion, von oben nach unten in Richtung der Achse 4 gesehen, der gesamte obere Nabenabschnitt 3 diese ovale oder elliptische Außenkontur 21 besitzt, d.h. auch die einzelnen Horizontalrippen 6, 7 sind deckungsgleich übereinander orientiert.

Die obere Horizontalrippe 7 besitzt eine Dicke von etwa 6 mm, was für die Sacklochbohrung 15 und das aus Metall bestehende Wuchtgewicht 16 ausreichend ist, während die Zwischen-Horizontalrippen 6 eine Dicke von etwa 1,5 mm auhveisen. Der Querschnitt der Horizontalrippen 6, 7 beträgt in Richtung der großen Halbachse 10 etwa 30 mm, während er in Richtung der kleinen Halbachse 11 etwa 25 mm beträgt.

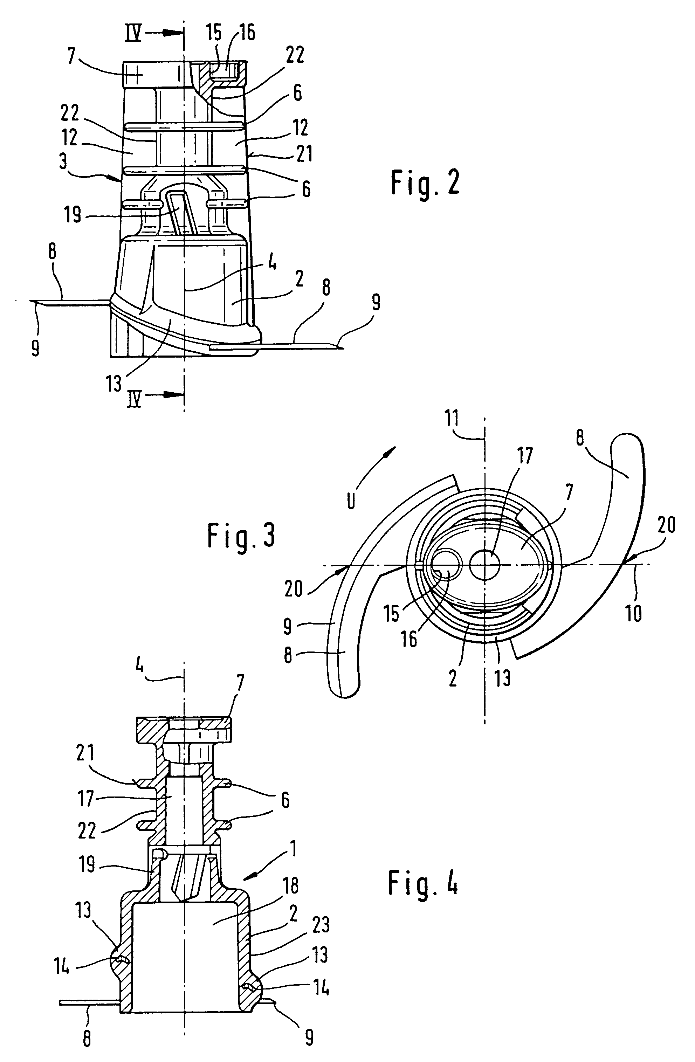

In den Figuren 1 und 3 ist auf der Oberseite der obersten Horizontalrippe 7 die große Halbachse, durch eine strichpunktierte Linie angedeutet, mit dem Bezugszeichen 10 bezeichnet, während die kleine Halbachse mit dem Bezugszeichen 11 benannt ist. Entlang der großen Halbachse 10 des elliptischen Querschnitts der einzelnen Horizontalrippen 6, 7 ist beidseitig des Hülsenteils 5 und zwischen den Horizontalrippen 6, 7 jeweils eine Vertikalrippe 12 ausgebildet, wie auch die Seitenansicht der Fig. 2 zeigt. Diese Vertikalrippe 12 erstreckt sich von der Unterseite der obersten Horizontalrippe 7 bis zu dem unteren Nabenabschnitt 2 hin bzw. läuft in der Oberseite des unteren Nabenabschnitts 2 aus.

Auf der Außenseite des unteren Nabenabschnitts 2 ist weiterhin ein umlaufender Wulst 13 vorgesehen, der, wie die Fig. 2 zeigt, einen Ring beschreibt, der unter einem Winkel zu der Achse 4 geneigt ist und der in Drehrichtung U des Arbeitswerkzeugs zur besseren Vermischung aufsteigend verläuft. Im Bereich dieses Wulstes 13 sind die beiden Schneidmesser 8 angesetzt, wobei das eine Schneidmesser 8, in Fig. 2 das rechte Schneidmesser, in Bezug auf die Achse 4 tiefer angeordnet ist, als das gegenüberliegende andere Schneidmesser 8. Da der gesamte Nabenabschnitt 2 des Schneidwerkzeugs, wie es gemäß der Ausführungsform dargestellt ist, aus Kunststoff gespritzt ist, dient der Wulst 13 unter anderem auch dazu, eine Verstärkungseinlage 14 aus Metall, wie die Schnittdarstellung der Fig. 4 zeigt, besser einzubetten, um die an den Fußpunkten der Schneidmesser 8 auftretenden Kräfte schadlos aufnehmen zu können.

Wie weiterhin in Fig. 1 zu sehen ist, sind die Schneidmesser 8 so in Bezug auf den elliptischen Querschnitt bzw. auf die versteifenden Vertikalrippen 14 angeordnet, daß deren mittlerer Bereich 20 der Schneidkanten 9 in Höhe dieser Vertikalrippen 12 jeweils endet.

In der Oberseite der obersten Horizontalrippe 7 ist eine Sacklochbohrung 15 vorgesehen, in die ein Ausgleichsgewicht 16 eingesetzt ist. Diese Sacklochbohrung 15 ist entlang der großen Halbachse 10 der elliptischen Oberfläche der Horizontalrippe 7, und zwar zu dem einen Rand hin von einer mittleren Aufnahmebohrung 17 hin versetzt, angeordnet. Das in die Aufnahmebohrung 15 eingesetzte Ausgleichsgewicht 16 dient dazu, im Rahmen der Endbearbeitung des Schneidwerkzeugs dieses so auszuwuchten, daß ein unwuchffreier Lauf des Schneidwerkzeugs auch unter hohen Drehzahlen gewährleistet ist.

Die Aufnahmebohrung 17 führt von der obersten Horizontalrippe 7 durch das Hülsenteil 5 bis zu dem unteren Nabenabschnitt 2, wo sie in einen erweiterten Bereich 18 übergeht. Das Schneidwerkzeug wird über diesen erweiterten Bereich 18 auf eine Antriebsspindel, beispielsweise eines stationären Küchengeräts, aufgesetzt. Nahe dem Übergangsbereich zwischen Hülsenteil 5 und dem unteren Nabenabschnitt 2 ist auf der Innenseite der Aufnahmebohrung 17 eine Verzahnung in Form von kurzen, nicht näher dargestellten Rippen vorgesehen, um eine Drehverbindung mit einer solchen Antriebsspindel herzustellen. Weiterhin sind zwei solcher Rippen als Federrippen 19 ausgebildet, die sich nach außen federnd wegbiegen können, um dann, nach Aufsetzen dieses Schneidwerkzeugs auf eine Antriebsspindel eines Küchengeräts, federnd an der Antriebsspindel sich anzulegen oder einzurasten. Hierdurch wird das Arbeitswerkzeug auf der Antriebsspindel axial gesichert und ist dennoch mit erhöhter Kraft von dieser abnehmbar.

Aufgrund der ovalen bzw. elliptischen Außenkontur des oberen Nabenabschnitts 3, die im wesentlichen durch die radial außenliegenden, freien Kanten der Horizontalrippen 6, 7 gebildet wird, werden unter Drehung des Schneidwerkzeugs die im Bereich des oberen Nabenabschnitts 3 anliegenden Nahrungsmittel, entsprechend der Kontur, im Bereich der großen Halbachse 10 nach außen bewegt, während es im Bereich der kleinen Halbachse 10 wieder zu dem Nabenabschnitt 3 hin gedrückt wird. Diese Bewegung setzt sich durch das Nahrungsmittel bis zu der Außenseite eines Behälters (nicht dargestellt) fort, so daß zum einen eine gute Durchmischung erfolgt, zum anderen insbesondere noch unzerkleinerte Teile der in einem Arbeitsbehälter befindlichen Masse zu den Schneidmessern 8 hin gleiten kann. Diese definierte Bewegung der Nahrungsmittel aufgrund des ovalen und elliptischen Querschnitts wird noch dadurch gefördert, daß einzelne, voneinander beabstandete Horizontalrippen 6, 7 vorgesehen sind.

## Patentansprüche

1. Rühr-, Knet- und/oder Schneidwerkzeug für ein Küchengerät, insbesondere zum Rühren, Kneten und/oder Zerkleinern von Nahrungsmitteln, mit einem antreibbaren Nabenteil (1) zum drehfesten Ankoppeln an eine Arbeitswelle, und mit mindestens zwei sich radial von der Achse (4) des Nabenteils (1 ) erstreckenden Werkzeugen (8), wobei der Nabenteil (1) in Richtung der Achse (4) gesehen in einen unteren, die Werkzeuge (8) aufnehmenden Nabenabschnitt (2) und mindestens einen weiteren, oberen Nabenabschnitt (3) aufweist,
**dadurch gekennzeichnet,**
daß der obere Nabenabschnitt (3), in Projektion auf eine Ebene senkrecht zur Achse (4) gesehen, eine ovale Außenkontur aufweist und daß der obere Nabenabschnitt (3) mit mehreren, zueinander beabstandeten Horizontalrippen (6, 7) versehen ist, die horizontal oder leicht schräg zur Achse (4) geneigt sind.

2. Rühr-, Knet- und/oder Schneidwerkzeug nach Anspruch 1,
**dadurch gekennzeichnet,**
daß die oberste Horizontalrippe (7) den stirnseitigen Abschluß des oberen Nabenabschnitts (3) bildet.

3. Rühr-, Knet- und/oder Schneidwerkzeug nach Anspruch 2,
**dadurch gekennzeichnet,**
daß zwischen dem unteren Nabenabschnitt (2) und der oberen Abschluß-Horizontalrippe (7) mindestens zwei Zwischen-Horizontalrippen (6) angeordnet sind.

4. Rühr-, Knet- und/oder Schneidwerkzeug nach Anspruch 2,
**dadurch gekennzeichnet,**
daß der obere Nabenabschnitt (3) ein Hülsenteil (5) auweist, das zentrisch zur Achse (4) verläuft und dessen Außenfläche (22) zwischen den Horizontalrippen (6, 7) teilweise auf seiner Außenseite freiliegt.

5. Rühr-, Knet- und/oder Schneidwerkzeug nach Anspruch 2,
**dadurch gekennzeichnet,**
daß die Horizontalrippen (6, 7) über mindestens eine sich nach außen erstreckende Vertikalrippe (12) miteinander verbunden sind.

6. Rühr-, Knet- und/oder Schneidwerkzeug nach Anspruch 5,
**dadurch gekennzeichnet,**
daß die Vertikalrippe(n) (12) radial so ausgerichtet ist (sind), daß sie in einer Ebene liegt (liegen), die durch die Achse (4) verläuft.

7. Rühr-, Knet- und/oder Schneidwerkzeug nach Anspruch 6,
**dadurch gekennzeichnet,**
daß die Vertikalrippe(n) (12) in Richtung der großen Halbachse (10) des Querschnitts der Außenkontur (21) verläuft (verlaufen).

8. Rühr-, Knet- und/oder Schneidwerkzeug nach Anspruch 7,
**dadurch gekennzeichnet,**
daß sich die Vertikalrippen (12) bis zur Außenkontur (21) erstrecken.

9. Rühr-, Knet- und/oder Schneidwerkzeug nach Anspruch 2,
**dadurch gekennzeichnet,**
daß die oberste Horizontalrippe (7) eine Aufnahme (17) für ein Wuchtgewicht (16) aufweist.

10. Rühr-, Knet- und/oder Schneidwerkzeug nach Anspruch 2,
**dadurch gekennzeichnet,**
daß die oberste Horizontalrippe (7) mindestens die doppelte Dicke der weiteren Horizontalrippen (6) aufweist.

11. Rühr-, Knet- und/oder Schneidwerkzeug nach Anspruch 2,
**dadurch gekennzeichnet,**
daß die Horizontalrippen (6, 7) eine Dicke von im Bereich von 1,5 bis 8 mm aufweisen.

## Claims

1. A mixing, kneading and/or cutting tool for a kitchen appliance, in particular for mixing, kneading and/or reducing food materials, with a drivable hub part (1) for coupling to a working shaft in a manner preventing relative rotation, and with at least two tools (8) extending radially from the axis (4) of the hub part (1), said hub part (1), as seen looking in the direction of the axis (4), including a lower hub section (2) receiving the tools (8) and at least one additional upper hub section (3),
**characterized in that** said upper hub section (3), as seen in projection to a plane normal to the axis (4), has an oval outer contour, and that said upper hub section (3) is provided with several horizontal ribs (6, 7) arranged in spaced relation to each other and extending horizontally or at a slight inclination to the axis (4).

2. The mixing, kneading and/or cutting tool as claimed in claim 1,
**characterized in that** the topmost horizontal rib (7) forms the closing end of the upper hub section (3).

3. The mixing, kneading and/or cutting tool as claimed in claim 2,
**characterized in that** at least two intermediate horizontal ribs (6) are arranged between the lower hub section (2) and the upper horizontal end rib (7).

4. The mixing, kneading and/or cutting tool as claimed in claim 2,
**characterized in that** said upper hub section (3) includes a sleeve part (5) which extends centrically to the axis (4) and whose outer surface (22) between the horizontal ribs (6, 7) is partially exposed.

5. The mixing, kneading and/or cutting tool as claimed in claim 2,
**characterized in that** the horizontal ribs (6, 7) are interconnected through at least one outwardly extending vertical rib (12).

6. The mixing, kneading and/or cutting tool as claimed in claim 5,
**characterized in that** said vertical rib(s) (12) is (are) radially aligned in such fashion as to lie in a plane extending through the axis (4).

7. The mixing, kneading and/or cutting tool as claimed in claim 6,
**characterized in that** said vertical rib(s) (12) extend(s) in the direction of the large half axis (10) of the cross section of the outer contour (21).

8. The mixing, kneading and/or cutting tool as claimed in claim 7,
**characterized in that** said vertical ribs (12) extend as far as to the outer contour (21).

9. The mixing, kneading and/or cutting tool as claimed in claim 2,
**characterized in that** the topmost horizontal rib (7) includes a mount (17) for a balance weight (16).

10. The mixing, kneading and/or cutting tool as claimed in claim 2,
**characterized in that** the thickness of the topmost horizontal rib (7) is at least twice the thickness of the additional horizontal ribs (6).

11. The mixing, kneading and/or cutting tool as claimed in claim 2,
**characterized in that** said horizontal ribs (6, 7) have a thickness in the range from 1.5 to 8 mm.

## Revendications

1. Outil d'agitation, de malaxage et/ou de coupe pour un appareil de cuisine, notamment pour l'agitation, le malaxage et/ou la fragmentation de denrées alimentaires, comportant une partie formant moyeu (1) pouvant être entraînée pour être accouplée solidairement en rotation à un arbre de travail, et comportant au moins deux outils (8) qui s'étendent radialement à partir de l'axe (4) de la partie formant moyeu (1), la partie formant moyeu (1) possédant, lorsqu'on regarde dans la direction de l'axe (4), une partie inférieure de moyeu (2) logeant les outils (8) et au moins une autre partie supérieure de moyeu (3), caractérisé en ce
que la partie supérieure de moyeu (3) présente un contour extérieur ovale, selon une vue en projection sur un plan perpendiculaire à l'axe (4), et que la partie supérieure de moyeu (3) comporte plusieurs nervures horizontales (6,7) distantes les unes des autres, qui sont horizontales ou légèrement inclinées par rapport à l'axe (4).

2. Outil d'agitation, de malaxage et/ou de coupe selon la revendication 1, caractérisé en ce
que la nervure horizontale la plus élevée (7) forme la terminaison frontale de la partie supérieure de moyeu (3).

3. Outil d'agitation, de malaxage et/ou de coupe selon la revendication 2, caractérisé en ce
qu'au moins deux nervures horizontales intercalaires (6) sont disposées entre la partie inférieure de moyeu (2) et la nervure horizontale terminale supérieure (7).

4. Outil d'agitation, de malaxage et/ou de coupe selon la revendication 2, caractérisé en ce
que la partie supérieure de moyeu (3) comporte une partie en forme de douille (5), qui est centrée sur l'axe (4) et dont la surface extérieure (22) est dégagée en partie au niveau de son côté extérieur entre les nervures horizontales (6,7).

5. Outil d'agitation, de malaxage et/ou de coupe selon la revendication 2, caractérisé en ce que les nervures horizontales (6,7) sont reliées entre elles par l'intermédiaire d'au moins une nervure verticale (12) qui s'étend extérieurement.

6. Outil d'agitation, de malaxage et/ou de coupe selon la revendication 5, caractérisé en ce
que la ou les nervures verticales (12) sont orientées radialement de telle sorte qu'elles sont situées dans un plan qui passe par l'axe (4).

7. Outil d'agitation, de malaxage et/ou de coupe selon la revendication 6, caractérisé en ce
que la ou les nervures verticales (12) s'étendent dans la direction du demi-grand axe (10) de la section transversale du contour extérieur (21).

8. Outil d'agitation, de malaxage et/ou de coupe selon la revendication 7, caractérisé en ce que les nervures verticales (12) s'étendent jusqu'au contour extérieur (21).

9. Outil d'agitation, de malaxage et/ou de coupe selon la revendication 2, caractérisé en ce
que la nervure horizontale la plus élevée (7) comporte un logement (17) pour un poids d'équilibrage (16).

10. Outil d'agitation, de malaxage et/ou de coupe selon la revendication 2, caractérisé en ce que la nervure horizontale la plus élevée (7) possède au moins une épaisseur double des autres nervures horizontales (6).

11. Outil d'agitation, de malaxage et/ou de coupe selon la revendication 2, caractérisé en ce que les nervures horizontales (6,7) possèdent une épaisseur dans la gamme de 1,5 à 8 mm.
